# FASCICULE DE BREVET EUROPEEN

(11) **EP 3 721 452 B1**
(45) Date de publication et mention de la délivrance du brevet: **11.08.2021**
(21) Numéro de dépôt: 18811278.3
(22) Date de dépôt: 05.12.2018
(51) Int. Cl.: G21F 5/008, G21F 5/08, G21F 5/10, G21C 19/07, B65D 81/38

(54) **PANIER DE RANGEMENT POUR STOCKAGE OU TRANSPORT DE MATIERES NUCLEAIRES**
LAGERKORB ZUM LAGERN ODER TRANSPORTIEREN VON KERNMATERIALIEN
STORAGE BASKET FOR STORING OR TRANSPORTING NUCLEAR MATERIALS

(30) Priorité: 07.12.2017 FR 1701281
(43) Date de publication de la demande: 14.10.2020
(73) Titulaire: Commissariat à l'Energie Atomique et aux Energies Alternatives, 75015 Paris (FR)
(72) Inventeur: ALLOU, Alexandre, 13680 Lançon-Provence (FR)
(74) Mandataire: Marks & Clerk France
(86) Numéro de dépôt international: PCT/EP2018/083630
(87) Numéro de publication internationale: WO 2019/110653

(56) Documents cités:
- DE-A1- 19 908 490
- JP-A- 2009 008 436
- JP-A- 2009 186 427
- US-A1- 2016 251 138

## Description

### DOMAINE TECHNIQUE DE L'INVENTION

L'invention concerne un panier de rangement pour stocker ou transporter des matières nucléaires, le panier étant constitué d'une ou de plusieurs cavités contiguës dans chacune desquelles peut être introduit un assemblage combustible, des crayons ou des aiguilles de combustibles, des tronçons de crayons ou d'aiguilles de combustibles, ou plus généralement du combustible nucléaire, ou encore des objets contenant de la matière nucléaire qui ne sont pas du combustible nucléaire.

L'invention concerne également un emballage pour le transport ou le stockage de matière nucléaire comprenant un tel panier de rangement.

### ETAT DE LA TECHNIQUE

Le stockage (ou l'entreposage), ainsi que le transport de la matière nucléaire doivent remplir des conditions de sécurité et de sûreté, et notamment garantir a minima :
- un risque de criticité nul,
- un risque d'échauffement limité voire nul (la chaleur peut provenir de la matière nucléaire et/ou de l'environnement de stockage, entreposage ou transport),
- un bon maintien mécanique.

Concernant plus particulièrement le transport de matières nucléaires, les problématiques liées à la sûreté et aux transports de matières radioactives sont notamment exposées dans les documents « La sûreté des transports de matières radioactives », par B. Lenail, Revue Générale Nucléaire n ° 1 2005 ; « Conception, fabrication et essais des emballages pour le transport des matières radioactives », par B. C. Bernardo, AIEA Bulletin Vol. 21, n°6 ou encore dans le document EP0752151.

Ainsi, les emballages de transport doivent être agréés par les autorités compétentes (françaises, britanniques, japonaises...) et répondre aux critères imposés par la réglementation de l'Agence internationale de l'Energie Atomique (AIEA) pour les emballages de Type B. Pour obtenir leur homologation, ils doivent garantir notamment :
- un risque de criticité nul,
- une température au niveau de la paroi extérieure limitée,
- une température de gaine de combustible acceptable vis-à-vis des critères de tenue mécanique desdites gaines ;
- des flux d'émission neutronique limités à l'extérieur de l'emballage, et ce, en conditions normales de transport et en conditions accidentelles de transport (chute, et/ou incendie, et/ou immersion).

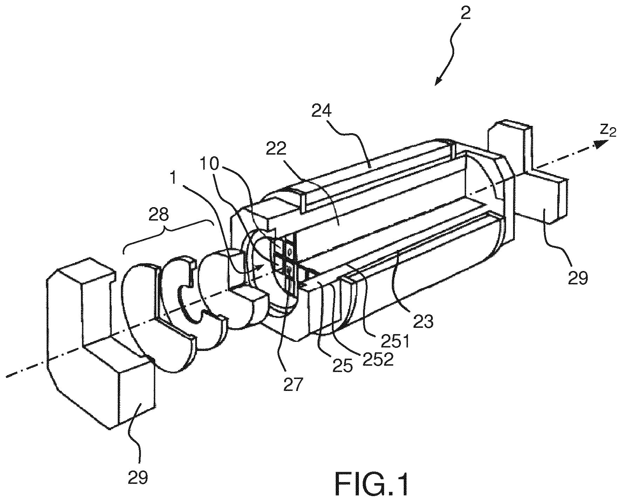

A titre d'exemple, illustré en figure 1, de l'extérieur vers l'intérieur, un emballage de transport 2 de l'état de la technique comporte en général sur sa grande longueur (c'est-à-dire selon sa direction longitudinale Z2) :
- une couche externe 24 de protection biologique, qui peut être traversée par des ailettes 23 de refroidissement ; la couche externe 24 peut contenir par exemple un matériau neutrophage comme une résine ou un mortier ;
- au moins une virole 25 de maintien, dont les fonctions principales sont d'assurer le maintien mécanique de l'emballage et de transférer la chaleur de l'intérieur vers l'extérieur de l'emballage ; il peut y avoir plusieurs viroles et/ou plusieurs couches, on peut alors parler de corps ; la virole 25 (ou le corps) est entourée par la couche externe 24 de protection biologique ;
- une cavité interne 22 apte à recevoir un assemblage combustible 3, et délimitée radialement par la virole 25.

Une virole est définie comme étant un cylindre creux, délimité par une surface cylindre intérieure 251 et une surface cylindrique extérieure 252.

La cavité interne 22 est généralement définie par la surface intérieure de la virole 25 s'étendant selon la direction longitudinale Z2 de l'emballage, ainsi que par un fond et un couvercle d'emballage agencés aux extrémités opposées de la virole selon la direction longitudinale Z2.

La couche externe 24 comprend un matériau de protection neutronique. Un tel matériau peut être également nommé « matériau neutrophage » ou « absorbant neutronique » dans la présente description. Cela peut être une résine ou un mortier.

La cavité 22 est refermée à l'aide d'un système de fermeture 28. Sur la figure 1, le système de fermeture 28 comprend un premier bouchon fixé par une bride, le tout étant refermé par un second bouchon de manière à assurer une protection biologique et une étanchéité de l'emballage une fois celui-ci refermé.

Un tel emballage peut aussi être utilisé pour le transport, mais aussi pour le stockage de matière nucléaire. On pourra parler plus généralement d'un « emballage ».

Lorsqu'il est utilisé pour le transport, l'emballage 2 comprend en outre un ou des capots amortisseurs de choc 29 de manière à conserver le confinement de la matière nucléaire dans la cavité 22, même en cas de chute. Les capots amortisseurs sont généralement constitués de blocs de bois assemblés, dont les fibres sont orientées dans un sens donné.

D'autres exemples de conteneurs formant emballage de transport sont décrits.

Par exemple, la demande de brevet US2016251138 décrit un récipient pour un stock radioactif, le récipient comprenant une paroi d'extrémité, une paroi latérale et un couvercle disposé en partie inférieure, le tout formant une chambre fermée pour recevoir le stock radioactif, ainsi qu'une couche plastiquement déformable disposée au niveau du couvercle, à l'intérieur de la chambre fermée. Cette couche plastiquement déformable en partie inférieure du récipient forme un amortisseur amélioré de manière à mieux résister à un certain nombre de situations extrêmes, par exemple, des situations d'impact extrême telles que des chutes d'une hauteur de plusieurs mètres.

La demande de brevet JP2009186427D2 décrit des absorbeurs de chocs pour un emballage de transport cylindrique, chaque absorbeur étant disposé à l'extérieur et à une des deux extrémités de l'emballage et comportant une plaque de base qui a une forme correspondant à la forme de l'extrémité de l'emballage pour être fixé à ladite extrémité, des ailettes disposées radialement du côté opposé à l'extrémité de l'emballage, et un couvercle pour recouvrir les ailettes, l'espace formé entre les ailettes, la plaque de base et le couvercle étant rempli d'un matériau amortisseur.

Un autre exemple adapté au stockage et non au transport de matière nucléaire est présenté dans la demande de brevet JP2009008436 qui décrit une installation de stockage de matières radioactives, de type puits de stockage, comprenant des tubes de stockage de matière radioactive vitrifiée disposés dans un puits de stockage, un corps poreux étant disposé autour des tubes de stockage pour améliorer le transfert thermique, le corps poreux étant du type grillage ou maillage métallique.

La matière nucléaire peut être conditionnée dans un ou des assemblages combustibles, un ou des crayons de combustible, une ou des aiguilles de combustible, un ou des tronçons de crayons ou d'aiguilles de combustible. Elle peut être sous forme de poudre contenue dans un contenant ou sous forme de source. Elle peut aussi être contenue dans des objets qui ne sont pas des combustibles nucléaires.

Pour simplifier la rédaction et la lecture de la présente description, il sera fait mention d'un (ou de plusieurs) assemblage(s) combustible(s), étant entendu que la matière nucléaire peut être conditionnée ou contenue dans d'autres objets.

Pour garantir les conditions de sécurité et de sûreté, le stockage, l'entreposage et le transport de la matière nucléaire est en général réalisée en disposant un ou plusieurs assemblages dans un ou des paniers de rangement.

Les paniers de rangement pour matière nucléaire sont particulièrement adaptés pour le combustible ayant été irradié, mais sont parfaitement utilisables pour du combustible neuf (non irradié).

Les paniers de rangement peuvent être utilisés en milieu sec ou humide, par exemple lors du stockage des combustibles en piscine ou lors de leur introduction dans des emballages de transport, lors d'un entreposage ou d'un stockage temporaire dans des structures en béton, ou bien encore lors de leur stockage final par enfouissement dans les couches géologiques.

Par exemple, en référence avec la figure 1, un panier 1 peut être introduit dans la cavité 22 d'un emballage de transport 2.

Un panier de rangement doit remplir simultanément au moins trois fonctions principales :
- un contrôle de la criticité de la matière nucléaire, à sec ou en présence de fluide à l'état liquide ou gazeux (eau, vapeur d'eau, eau borée, sodium liquide ...) ;
- un transfert thermique, pour évacuer la chaleur potentiellement dégagée par la matière nucléaire, notamment dans le cas des assemblages de combustibles irradiés, et ce, compte tenu de l'environnement de stockage, entreposage ou transport ;
- une résistance mécanique suffisante pour : assurer le maintien de la géométrie du panier chargé de matière nucléaire et éviter la détérioration de la matière nucléaire lors des utilisations normales et incidentelles (manutention, transport...) et assurer le contrôle de la criticité par maintien de la géométrie du panier même en conditions incidentelles (choc et chute importants) selon les réglementations en vigueur.

Les paniers de rangement sont parfois conçus également en vue d'apporter un complément de blindage contre les rayonnements ionisants, utile dans certaines applications.

Enfin, un panier de rangement doit de préférence avoir un poids limité, pour ne pas alourdir l'ensemble dans lequel il est destiné à être disposé.

Un panier de rangement pourra être également nommé « panier » dans la présente description.

On connait de nombreux types de paniers pour assemblages combustibles nucléaires.

Un panier de rangement est habituellement de forme cylindrique s'étendant selon une direction longitudinale, et dont la section est en général sensiblement circulaire extérieurement. Mais un panier peut présenter d'autres sections adaptées à la forme du conteneur destiné à recevoir le panier.

Un panier de rangement assure la fonction de maintien mécanique en maintenant la matière nucléaire (via l'objet qui le contient) dans une ou plusieurs cavités.

Ainsi, un panier de rangement comporte une ou plusieurs cavités contigües dans lesquelles peuvent être introduits un ou des objets contenant de la matière nucléaire.

Les cavités sont en général de grande longueur, inférieure ou égale à la longueur du panier. Elles présentent généralement une forme sensiblement cylindrique s'étendant selon la direction longitudinale du panier. La section d'une cavité peut être circulaire, carrée, rectangulaire, ou hexagonale, ou autre forme adaptée à l'objet qu'elle doit recevoir.

Par exemple, en référence avec la figure 1, un panier 1 comporte plusieurs cavités 10, chaque cavité étant configurée pour recevoir un assemblage combustible 3.

Un panier de rangement doit assurer un niveau minimal de dissipation thermique de l'assemblage combustible (plus généralement l'objet) contenant la matière nucléaire vers l'extérieur du panier.

Pour évacuer la chaleur, un panier de rangement comprend en général des parois qui peuvent être épaisses et faites en un matériau thermiquement conducteur, en général un matériau métallique, ce qui alourdit le poids du panier.

Or on cherche à alléger le panier, tout en dégradant le moins possible sa capacité d'évacuation de la chaleur.

L'invention vise à surmonter les inconvénients des paniers de rangement connus.

Un des objectifs de l'invention est de réduire le poids des paniers de rangement, tout en conservant une conductivité thermique du même ordre de grandeur que celle des paniers connus, voire en l'améliorant.

En outre, l'invention vise à disposer d'un panier de rangement qui assure les fonctions et les conditions de sécurité et de sûreté mentionnées plus avant.

### EXPOSE DE L'INVENTION

Un objet de l'invention permettant d'atteindre ce but est un panier pour le transport, le stockage, et/ou l'entreposage de matières nucléaires selon la revendication 1.

La mousse métallique entoure la ou les cavités.

La direction longitudinale du panier peut être orientée à la verticale, ou à l'horizontale ou selon toute autre direction.

Le panier selon l'invention permet d'assurer une continuité thermique par la présence de métal, tout en assurant un gain de poids qui peut être de l'ordre de 90%, selon la porosité de la mousse métallique utilisée, et la nature du gaz contenu dans les pores.

Le panier selon l'invention permet en outre une protection contre les chocs de la matière nucléaire lorsqu'elle est stockée ou entreposée, par exemple dans une piscine ou un site d'entreposage, ou lorsqu'elle est transportée. En effet, la mousse métallique, de par sa porosité et donc sa capacité de compression, permet d'absorber des chocs mécaniques et de dissiper l'énergie de déformation mécanique.

En créant une protection contre les chocs au plus près de l'objet contenant la matière nucléaire, au lieu de protéger le contenant ou l'enveloppe la plus extérieure, on réduit le volume de protection et donc le poids, et on protège de manière plus sûre la matière nucléaire contre les chocs.

L'invention permet donc d'ajouter une fonction d'amortissement en cas de crash à un panier de rangement.

Selon l'invention, le panier de rangement comprend en outre une paroi externe. La mousse métallique est alors contenue à l'intérieur de ladite paroi externe. La paroi externe permet notamment de contenir la mousse métallique.

Selon l'invention, la paroi externe est formée par une tôle mince thermiquement conductrice.

Par tôle mince, il faut comprendre une tôle suffisamment mince pour qu'elle ne contraigne pas les mouvements de compression et/ou de dilatation de la mousse métallique.

En outre, la tôle doit être suffisamment épaisse pour assurer le maintien de ladite mousse métallique à l'intérieur du panier.

L'épaisseur de la tôle mince est avantageusement comprise entre 1 mm et 3 mm.

Une tôle mince conductrice formant la paroi externe permet d'offrir une surface de contact sans aspérités pour une meilleure conduction de la chaleur vers l'extérieur du panier. En outre, la présence de la tôle au niveau de la paroi externe rigidifie la mousse métallique. Enfin, la tôle mince au niveau de la paroi externe autorise les mouvements de compression et/ou de dilatation de la mousse métallique, d'autant plus lorsqu'elle est réalisée dans le même matériau ou dans un matériau ayant un coefficient de dilatation voisin du coefficient de dilatation de la mousse métallique.

Selon l'invention, le panier de rangement comprend au moins une paroi interne délimitant au moins une cavité. La mousse métallique est alors disposée autour de la ou les parois internes.

Selon l'invention, la moins une paroi interne est formée par une tôle mince thermiquement conductrice.

En outre, la tôle doit être suffisamment épaisse pour assurer le maintien de ladite mousse métallique à l'intérieur du panier.

L'épaisseur de la tôle mince est avantageusement comprise entre 1 mm et 3 mm.

Une tôle mince conductrice formant une ou de plusieurs parois internes (délimitant une ou plusieurs cavités) permet de disposer d'un dispositif encore plus rigide, et d'améliorer le transfert thermique, du fait qu'elle autorise une partie du flux de chaleur à contourner la mousse métallique.

L'espace contenu entre la paroi externe et la ou les paroi(s) interne(s) doit être suffisant pour contenir une quantité suffisante de mousse métallique pour :
- avoir un gain de poids significatif (pour une porosité de mousse donnée, plus le volume de mousse est grand plus le gain de poids est significatif)
- avoir une absorption d'énergie mécanique de déformation significativement plus favorable que la matière pleine.

De préférence, la mousse métallique présente une porosité comprise entre 50 à 97%, par exemple entre 79 et 81 %.

Selon un mode de réalisation, le gaz compris dans les pores de la mousse métallique comprend de l'hélium.

Selon un autre mode de réalisation, le gaz compris dans les pores de la mousse métallique comprend de l'azote.

Selon un autre mode de réalisation, le gaz compris dans les pores de la mousse métallique comprend de l'air

Un autre objet de l'invention est un ensemble comprenant un panier de rangement et un conteneur apte à contenir au moins un panier de rangement.

Selon un mode de réalisation, le conteneur étant un emballage de transport, le panier étant disposé dans une cavité de l'emballage.

Selon un autre mode de réalisation, le conteneur est un puits d'entreposage de matières nucléaires.

### DESCRIPTION DES FIGURES

D'autres caractéristiques et avantages de l'invention, et des différents modes de réalisation apparaîtront à l'aide de la description qui suit donnée à titre illustratif et non limitatif, faite en regard des figures annexées parmi lesquelles :
- la figure 1 illustre un emballage connu de l'état de la technique ;
- les figures 2A (panier illustré dans un conteneur) et 2B (panier seul illustré en 3D) illustrent un premier mode de réalisation de l'invention, le panier comprenant une seule cavité ;
- la figure 3 illustre un second mode de réalisation de l'invention, le panier comprenant plusieurs cavités (panier illustré dans un conteneur).

### EXPOSÉ DÉTAILLÉ DE MODES DE RÉALISATION PARTICULIERS

La figure 1 a été décrite en introduction de la présente demande et ne sera pas reprise ici.

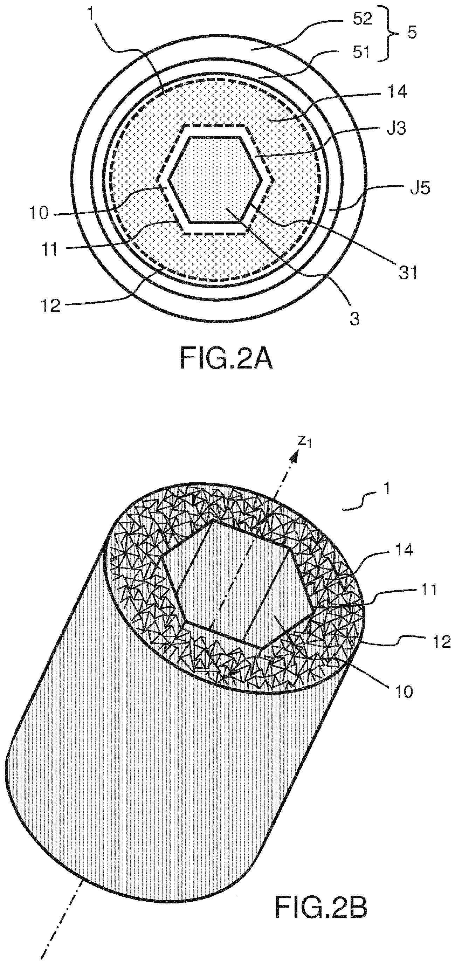

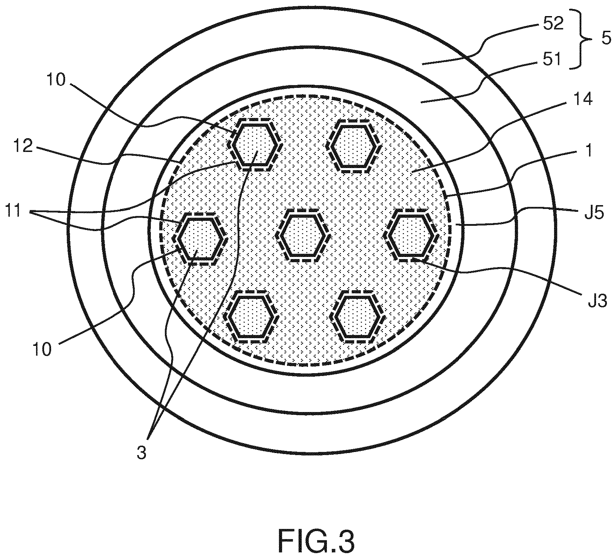

Dans l'ensemble des figures 2A et 3, le panier de rangement 1 selon l'invention est illustré en étant introduit dans un conteneur 5 apte à recevoir un ou plusieurs paniers de rangement, le conteneur 5 comprenant une couronne cylindrique interne 51 et une couronne cylindrique externe 52, et pouvant être un emballage de transport 2 ou un puits, étant entendu que le conteneur peut ne comprendre qu'une seule couronne, pleine ou creuse (ou ajourée) voire juste contenir une paroi apte à entourer le panier, et que le panier peut être utilisé ailleurs que dans un emballage ou dans un puits, par exemple dans un autre stockage à sec ou en piscine.

Le panier de rangement 1 selon l'invention s'étend selon une direction longitudinale Z1. Il comporte une ou plusieurs cavités contigües 10 dans lesquelles peuvent être introduits des objets contenant de la matière nucléaire, typiquement un assemblage par cavité.

Une cavité 10 présente une forme sensiblement cylindrique s'étendant selon la direction longitudinale Z1 du panier 1. La section d'une cavité peut être circulaire, carrée, rectangulaire, ou hexagonale, ou autre forme adaptée à l'objet qu'elle doit recevoir.

Dans l'ensemble des figures 2A et 3, l'objet contenant de la matière nucléaire est représenté par un assemblage combustible 3 de section hexagonale.

Mais il peut s'agir d'un assemblage combustible ayant une autre section, d'un ou de plusieurs crayons, d'une ou de plusieurs aiguilles non nécessairement disposés dans un assemblage, d'un ou de plusieurs tronçons de crayons ou d'une ou de plusieurs aiguilles de combustibles, ou plus généralement du combustible nucléaire, ou encore des objets contenant de la matière nucléaire qui ne sont pas des combustibles nucléaires. Plus généralement, la matière nucléaire est conditionnée dans un objet.

Pour simplifier la rédaction et la lecture de la présente description, il sera généralement fait mention d'un assemblage combustible, étant entendu qu'il peut s'agir d'un autre objet qu'un assemblage.

L'assemblage 3 est apte à être introduit dans une cavité 10 du panier de rangement 1. La cavité 10 présente une section hexagonale adaptée pour recevoir l'assemblage.

Une paroi interne 11 formant une cavité 10 du panier de rangement représente la « paroi froide » relativement à l'enveloppe externe 31 de l'assemblage 3 qui représente la « paroi chaude ».

Egalement en référence aux figures 2A et 3, la couronne interne 51, et plus précisément la surface intérieure de ladite couronne interne, du conteneur 5 peut représenter une « paroi froide » relativement à la paroi externe 12 du panier 1, qui représente alors la « paroi chaude ».

La chaleur doit être transmise depuis l'assemblage 3 par l'intermédiaire de son enveloppe externe 31 vers la paroi interne 11 formant la cavité 10 dans laquelle l'assemblage est disposé, puis elle doit traverser le panier 1 vers sa paroi externe 12, puis être transmise au conteneur 5 pour être dissipée à l'extérieur dudit conteneur.

Les figures 2A (panier disposé dans un conteneur) et 2B (panier illustré seul et en 3 dimensions) illustrent un panier selon un premier mode de réalisation, le panier 1 comprenant une seule cavité 10.

Le panier de rangement 1 s'étend selon la direction longitudinale Z1.

Du centre vers la périphérie de la figure 2A, on trouve un assemblage 3 disposé dans une unique cavité 10, délimitée par une paroi interne 11 du panier 1.

La paroi interne 11 est en tôle mince conductrice.

En outre, la tôle doit être suffisamment épaisse pour assurer le maintien de ladite mousse métallique.

L'épaisseur de la tôle mince est avantageusement comprise entre 1 mm et 3 mm.

Un jeu J3 est mis en place entre un assemblage combustible 3 et la paroi interne 11 du panier, ce, afin de pouvoir introduire ledit assemblage et d'absorber les dilatations mécaniques différentielles pouvant survenir entre l'assemblage 3 et la cavité 10 du panier.

Le panier de rangement 1 comprend une paroi externe 12.

La paroi externe 12 est en tôle mince conductrice.

En outre, la tôle doit être suffisamment épaisse pour assurer le maintien de ladite mousse métallique.

L'épaisseur de la tôle mince est avantageusement comprise entre 1 mm et 3 mm.

Lorsque le panier de rangement 1 est destiné à être reçu dans un conteneur 5, un jeu J5 est mis en place entre la paroi externe 12 du panier et la couronne interne 51 du conteneur 5, ce, afin de pouvoir introduire ledit panier à l'intérieur du conteneur 5 et d'absorber les dilatations différentielles entre la couronne interne du conteneur 51 et la paroi externe 12 du panier pouvant survenir.

Entre la paroi interne 11 et la paroi externe 12 du panier, de la mousse métallique 14 est insérée. Ainsi, la mousse métallique 14 est encapsulée entre la paroi interne 11 et la paroi externe 12.

La figure 2B montre le volume occupé par la mousse métallique dans un panier de rangement illustré seul. Lorsqu'il est rempli de matière pleine, le poids d'un panier de rangement de l'état de la technique est évalué à 244 kg/ml (mètre linéaire). Lorsqu'il est rempli de mousse métallique selon l'invention, un panier de rangement selon l'invention ayant les mêmes dimensions présente un poids inférieur à 16 kg/ml, soit seulement 7% du poids d'un panier de rangement de l'état de la technique.

La figure 3 illustre un troisième mode de réalisation de l'invention, le panier comprenant plusieurs cavités (panier illustré dans un conteneur). Ce mode se distingue du premier mode de réalisation en ce que le panier comprend plusieurs cavités 10. Il comprend plusieurs parois internes 11 délimitant chacune une cavité 10. Le panier de rangement 1 comprend en outre une paroi externe 12 qui s'étend selon la direction longitudinale Z1 du panier.

Chaque cavité 10 est configurée pour recevoir un assemblage 3 ou tout autre objet comprenant de la matière nucléaire.

Les parois internes 11 et la paroi externe 12 sont en tôles minces conductrices.

En outre, la tôle doit être suffisamment épaisse pour assurer le maintien de ladite mousse métallique.

L'épaisseur de la tôle mince est avantageusement comprise entre 1 mm et 3 mm.

Dans l'espace compris entre les parois internes 11 et la paroi externe 12, est insérée de la mousse métallique 14. Ainsi la mousse métallique est encapsulée entre la tôle mince de la paroi externe 12 et les parois internes 11.

Pour l'ensemble des modes de réalisation, les fonctions principales de la mousse métallique sont :
- réduire le poids du panier de rangement,
- absorber le choc par dissipation de l'énergie de déformation,
- transmettre la chaleur.

Pour l'ensemble des modes de réalisation également :
- la mousse métallique présente de préférence une porosité comprise entre 50 à 97%, par exemple entre 79 et 81 % ;
- les pores sont remplis de gaz : il peut s'agir d'hélium qui a pour avantage d'être plus léger que l'air et de réduire davantage le poids du panier, ou encore d'air qui a pour avantage de ne pas nécessiter d'introduction de gaz spécifique avec le risque de fuite ou encore d'azote ;
- comme indiqué dans l'exposé de l'invention, par tôle mince, il faut comprendre une tôle suffisamment mince pour qu'elle ne contraigne pas les mouvements de compression et/ou de dilatation de la mousse métallique ;
- la tôle doit de préférence être suffisamment épaisse pour assurer le maintien de ladite mousse métallique ;
- la tôle doit de préférence être composée du même matériau que celui de la mousse pour les forts gradients thermique afin d'accompagner les mouvements de dilatation ;
- la tôle doit être conductrice thermiquement
- la liaison contact entre la mousse métallique et les tôles qui l'encapsulent peut être de type soudure, monobloc, ou emmanché forcé : cela permet de garantir une bonne performance thermique ;
- le gain de poids est obtenu par la porosité de la mousse métallique : la porosité peut être ajustée lors de la fabrication de la mousse métallique, en fonction du gain souhaité ;
- l'important gain de poids peut notamment permettre de conserver la structure en mousse métallique sur toute la longueur de l'objet à transporter, ce qui permet d'avoir un absorbeur de chocs continu autour de l'objet à transporter, tout en conservant les propriétés de transfert thermique ;
- la mousse métallique peut être en aluminium ;
- les tôles minces peuvent également être en aluminium.

En outre, le panier selon l'invention peut ne pas avoir de parois inférieures et/ou supérieures, notamment dans le cas où le panier est en position verticale en fonctionnement. Cela a pour avantage d'améliorer le transfert thermique, en améliorant le phénomène de convection à l'intérieur de la mousse métallique.

En outre, en conférant une protection contre les chocs au plus près de l'objet contenant la matière nucléaire, entre la paroi externe et la ou les parois internes du panier, on gagne en protection et en poids. Cela a également pour avantage de protéger plus sûrement la matière nucléaire contre les chocs et les déformations mécaniques.

Le panier de rangement selon l'invention est particulièrement adapté pour du combustible nucléaire irradié, mais peut être utilisé pour du combustible neuf.

Le panier de rangement selon l'invention peut être utilisé en milieu sec ou humide, par exemple lors du stockage des combustibles en piscine ou lors de leur introduction dans des emballages de transport, lors d'un entreposage ou d'un stockage temporaire dans des structures en béton, ou bien encore lors de leur stockage final par enfouissement dans les couches géologiques.

Les différents modes présentés peuvent être combinés entre eux.

En outre, la présente invention n'est pas limitée aux modes de réalisation précédemment décrits mais s'étend à tout mode de réalisation entrant dans la portée des revendications.

## Revendications

1. Panier de rangement (1) pour le transport et/ou le stockage de matières nucléaires comprenant une paroi externe (12) et au moins une paroi interne (11) délimitant au moins une cavité (10) destinée à recevoir lesdites matières nucléaires, ledit panier de rangement contenant une mousse métallique (14) comprenant des pores remplies d'un gaz, la mousse métallique (14) étant insérée autour de la au moins une cavité (10) entre la paroi externe et la au moins une paroi interne, et chaque paroi externe (12) et paroi interne (11) étant formée par une tôle mince conductrice de la chaleur, l'épaisseur de ladite tôle mince étant déterminée de manière à ce qu'elle ne contraigne pas les mouvements de compression et/ou de dilatation de la mousse métallique (14).

2. Panier de rangement (1) selon la revendication 1, l'épaisseur de la tôle mince de la paroi externe (12) étant comprise entre 1 et 3 mm.

3. Panier de rangement (1) selon la revendication 1 ou 2, l'épaisseur de la tôle mince de la au moins une paroi interne (11) étant comprise entre 1 et 3 mm.

4. Panier de rangement (1) selon l'une des revendications précédentes, la mousse métallique (14) présentant une porosité comprise entre 50 à 97%, par exemple entre 79 et 81 %.

5. Panier de rangement (1) selon l'une des revendications précédentes, le gaz compris dans les pores de la mousse métallique (14) comprenant de l'hélium.

6. Panier de rangement (1) selon l'une des revendications 1 à 4, le gaz compris dans les pores de la mousse métallique (14) comprenant de l'azote, ou de l'air.

7. Ensemble comprenant au moins un panier de rangement (1) choisi parmi l'une des revendications 1 à 6 et un conteneur (2, 5) contenant le au moins un panier de rangement.

8. Ensemble selon la revendication 7, le conteneur (2) étant un emballage de transport, le panier de rangement (1) étant logé dans la cavité interne (22) dudit emballage de transport.

9. Ensemble selon la revendication 7, le conteneur (5) étant un puits d'entreposage.

## Patentansprüche

1. Lagerkorb (1) zum Transportieren und/oder Lagern von Kernmaterialien, umfassend eine äußere Wand (12) und mindestens eine innere Wand (11), welche mindestens einen Hohlraum (10) abgrenzt, welcher dazu bestimmt ist, die Kernmaterialien aufzunehmen, wobei der Lagerkorb einen metallischen Schaum (14) enthält, welcher mit einem Gas gefüllte Poren umfasst, wobei der metallische Schaum (14) um den mindestens einen Hohlraum (10) zwischen der äußeren Wand und der mindestens einen inneren Wand eingelegt ist, und wobei jede äußere Wand (12) und innere Wand (11) durch ein dünnes, wärmeleitfähiges Blech gebildet ist, wobei die Dicke des dünnen Blechs so bestimmt ist, dass sie die Kompressions- und/oder Dehnungsbewegungen des metallischen Schaums (14) nicht beeinträchtigt.

2. Lagerkorb (1) nach Anspruch 1, wobei die Dicke des dünnen Blechs der äußeren Wand (12) zwischen 1 und 3 mm beträgt.

3. Lagerkorb (1) nach Anspruch 1 oder 2, wobei die Dicke des dünnen Blechs der mindestens einen inneren Wand (11) zwischen 1 und 3 mm beträgt.

4. Lagerkorb (1) nach einem der vorhergehenden Ansprüche, wobei der metallische Schaum (14) eine Porosität zwischen 50 und 97 % aufweist, beispielsweise zwischen 79 und 81 %.

5. Lagerkorb (1) nach einem der vorhergehenden Ansprüche, wobei das in den Poren des metallischen Schaums (14) umfasste Gas Helium umfasst.

6. Lagerkorb (1) nach einem der Ansprüche 1 bis 4, wobei das in den Poren des metallischen Schaums (14) umfasste Gas Stickstoff oder Luft umfasst.

7. Baugruppe, umfassend mindestens einen Lagerkorb (1), ausgewählt aus einem der Ansprüche 1 bis 6 und einen Behälter (2, 5), welcher den mindestens einen Lagerkorb enthält.

8. Baugruppe nach Anspruch 7, wobei der Behälter (2) eine Transportverpackung ist, wobei der Lagerkorb (1) in dem inneren Hohlraum (22) der Transportverpackung untergebracht ist.

9. Baugruppe nach Anspruch 7, wobei der Behälter (5) ein Lagerungsschacht ist.

## Claims

1. Storage basket (1) for transporting and/or storing nuclear materials comprising an external wall (12) and at least one internal wall (11) which delimit at least one cavity (10) which is intended to receive the nuclear materials, the storage basket containing a metal foam (14) which comprises pores which are filled with a gas, the metal foam (14) being inserted around the at least one cavity (10) between the external wall and the at least one internal wall, and each external wall (12) and internal wall (11) being formed by a thin metal sheet which conducts heat, the thickness of the thin metal sheet being determined so that it does not constrain the compression and/or expansion movements of the metal foam (14).

2. Storage basket (1) according to claim 1, the thickness of the thin metal sheet of the external wall (12) being between 1 and 3 mm.

3. Storage basket (1) according to claim 1 or 2, the thickness of the thin metal sheet of the at least one internal wall (11) being between 1 and 3 mm.

4. Storage basket (1) according to any one of the preceding claims, the metal foam (14) having a porosity of from 50 to 97%, for example, between 79 and 81%.

5. Storage basket (1) according to any one of the preceding claims, the gas contained in the pores of the metal foam (14) comprising helium.

6. Storage basket (1) according to any one of claims 1 to 4, the gas contained in the pores of the metal foam (14) comprising nitrogen or air.

7. Assembly comprising at least one storage basket (1) selected from any one of claims 1 to 6 and a container (2, 5) containing the at least one storage basket.

8. Assembly according to claim 7, the container (2) being a transport packaging, the storage basket (1) being accommodated in the internal cavity (22) of the transport packaging.

9. Assembly according to claim 7, the container (5) being a storage well.
